Europäisches Patentamt

European Patent Office

Office européen des brevets

(11) Veröffentlichungsnummer: 0 345 408

A1

## (12) EUROPÄISCHE PATENTANMELDUNG

(21) Anmeldenummer: 88890142.8

(22) Anmeldetag: 10.06.88

(51) Int. Cl.4: F41G 3/06 , G02B 23/12 , G01S 17/02

(43) Veröffentlichungstag der Anmeldung:
13.12.89 Patentblatt 89/50

(84) Benannte Vertragsstaaten:
AT BE CH DE ES FR GB GR IT LI LU NL SE

(71) Anmelder: NORMA MESSTECHNIK, OPTIK, ELEKTRONIK GMBH
Eumigweg 7
A-2351 Wiener Neudorf(AT)

(72) Erfinder: Kurz, Günter
Spiegelgasse 11
A-2331 Vösendorf(AT)
Erfinder: Radda, Peter
Eisteichstrasse 9/2/15
A-1110 Wien(AT)
Erfinder: Dick, Ludwig, Dipl.-Ing.
Erlaufstrasse 26
A-2344 Ma. Enzersdorf(AT)
Erfinder: Dietl, Georg
Buchenweg 16
A-2351 Wiener Neudorf(AT)

(54) Optoelektronische Visier-, Ziel-, Mess- und Steuereinrichtung.

(57) Während des Visier- und Zielvorganges mit einer optoelektronischen Visier-, Ziel-, Mess- und Steuereinrichtung wird über nur eine Lichteintrittsoptik (1) durch entsprechende strahlenteilende Beschichtung in den Prismen (4,5,11) eine zweckentsprechende Lichtverteilung erzielt, die Entfernung zu dem Zielobjekt gemessen, digital in die Prismenanordnung (16) eingeblendet und gleichzeitig durch Auswertung der Helligkeitsänderung auf einem Fotodiodenarray (25) eine Geschwindigkeitsmessung durchgeführt, diese Werte einer Steuereinrichtung (21) zugeführt und unter Berücksichtigung der Munitionsdaten die Vorhaltegröße entweder dem Bediener angezeigt oder eine Absehereinrichtung angesteuert.

FIGUR 2

# OPTOELEKTRONISCHE VISIER-, ZIEL-, MESS- UND STEUER EINRICHTUNG

Die Erfindung bezieht sich darauf eine für Tag- und Nachsicht ausgelegte Zieleinrichtung derart auszubilden, daß über das gemeinsame Lichteintrittsobjektiv während des Zielvorganges gleichzeitig sowohl eine Entfernungs- als auch Geschwindigkeitsmessung mit einem daraus resultierenden automatischen Absehen und Vorhalten durchgeführt werden kann, wobei alle Systeme in einer Einheit zusammenfaßt sind.

Bei Zieleinrichtungen ist es vielfach erforderlich unabhängig von unterschiedlichen Lichtverhältnissen gleichzeitig während des Anvisieren sowohl die Entfernung als auch die Geschwindigkeit des sich bewegenden Zielobjektes zu ermitteln. Weiters ist es zur genauen Ermittlung der Vorhaltegröße von Bedeutung, daß das Anvisieren und Messen vom gleichen Bezugspunkt aus durchgeführt wird.

Zieleinrichtungen im gebräuchlichen Sinn als rein optische Visier-oder Zielinstrumente sind allgemein bekannt, auch in besonderen Ausführungen als einzeln oder kombinierten Einrichtungen für Tagsicht und Nachtsicht. Bekannt sind auch Entferungsmesser und Meßverfahren auf elektrooptischer Basis (Europ. Patentanmeldung 0022747), bei dem allein das Meßverfahren bzw. die Vorrichtung zur Durchführung beschrieben ist. In verschiedenen Veröffentlichungen werden Entfernungsmesser basierend auf dem Laserprinzip beschrieben. Bekannt sind Laserentfernungsmesser (Europ. Patentanmeldung 0008089) auf dem Prinzip des Impulsradars, bei dem die kurze Impulsdauer voll ausgenutzt wird, sowie Laserentfernungsmesser (deutsches Patent 2053111) bei denen eine Entscheidung ermöglicht wird, welches der gemessenenen Objekte das gesuchte Zielobjekt ist, sowie Laserentfernungsmesser (deutsches Patent 1946864) die es gestatten einen vorgegebenen Entferungsbereich zu überwachen und in diesen Bereich eindringende Objekte mittels Signal anzuzeigen. Besondere Ausführungen eines Laserenferungsmessers (deutsches Patent 2817232) sind eine Ausführung im Zusammenhang mit einem Rundsicht-Periskop sowie (europ. Patentanmeldung 0008104) eine Kombination eines Entfernungsmessers nach dem Horton-Höhenmesserverfahren mit einer Geschwindigkeitsmesseinrichtung mit rauschfrequenzmontiertem Sender. Bei allen der genannten Veröffenlichungen wird eine bzw. maximal zwei Einrichtungen die einen Teilbereich einer kompletten Zieleinrichtung betreffen, in seiner erfindungsgemäßen Art beschrieben.

Hier will die vorgelegte Erfindung Abhilfe schaffen. Die Erfindung, wie sie in den nachfolgenden Ansprüchen gekennzeichnet ist, faßt alle für eine komplette Ziel- bzw. Visiereinrichtung erforderlichen Einheiten in eine Einheit zusammen, ermöglicht bei Tag- und Nachtlicht während des Zielvorganges gleichzeitig die Messung der Entfernung und Geschwindigkeit, definiert die Vorhaltegröße und ermöglicht die Ansteuerung einer automatischen Absehneinrichtung.

Die durch die Erfindung erreichten Vorteile sind im wesentlichsten darin zu sehen, daß der Ziel- und Meßvorgang über nur eine Lichteintrittsoptik durchgeführt wird, so daß Ziel- und oder Meßfehler, wie sie bei der Anwendung von getrennten Geräten auftreten, komplett ausgeschaltet werden und daß durch eine strahlenteilende Beschichtung der Prismen keine wesentlichen Lichtverluste auftreten. Ein wesentlicher Vorteil liegt auch darin, daß die ermittelten Werte aus der Entfernung und Geschwindigkeit direkt elektronisch verarbeitet werden und die Vorhaltegröße im Beobachtungsokular angezeigt wird bzw. eine automatische Absehneinrichtung direkt angesteuert werden kann.

Im folgenden wird die Erfindung anhand von lediglich einer Ausführungsweg darstellenden Zeichung erläutert.

Es zeigt

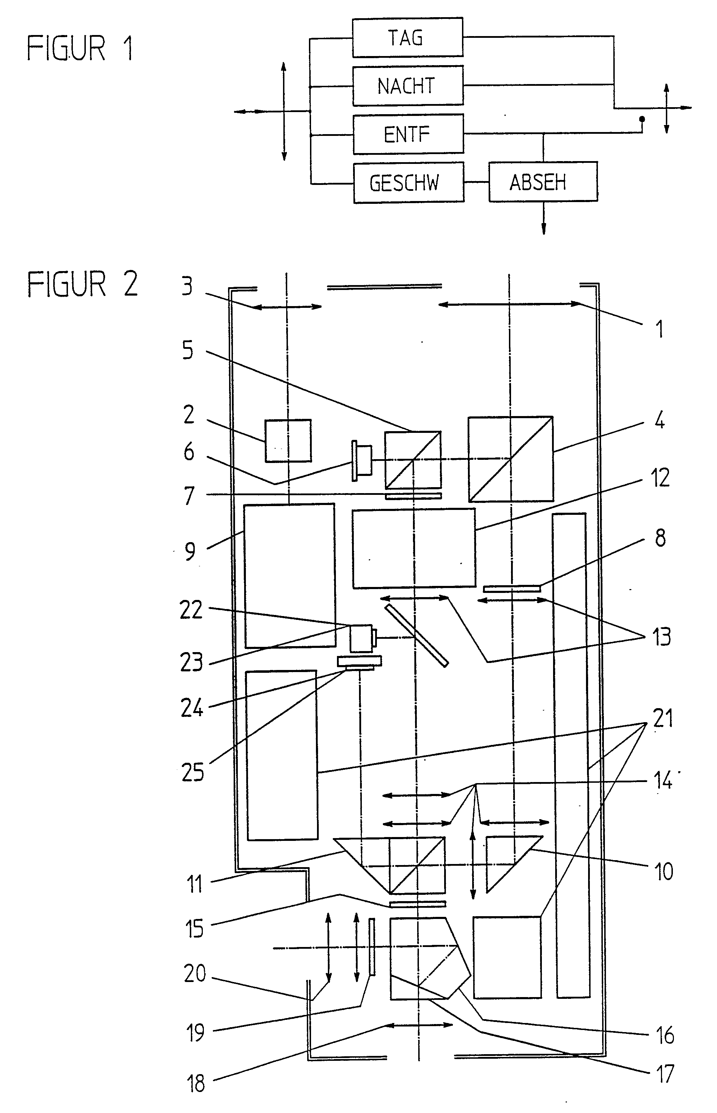

Figur 1 die prinzipielle Funktion der erfindungsgemäßen Einrichtung.

Figur 2 die Schnittdarstellung der erfindungsgemäßen Einrichtung mit den in den Ansprüchen gekennzeichneten Lösungen.

Figur 3 die automatische Absehneinrichtung auf elektrischer Basis.

Figur 4 die automatische Absehneinrichtung auf mechanischer Basis.

Erfindungsgemäß wird über das Lichteintrittsobjektiv (1), das als Optik für Tag-, Nacht- und Lasercharakteristik für einen Wellenlängenbereich von ca. 380 bis ca. 1100 nm ausgelegt ist, das eintretende Mischlicht den Prismen (4a, 4b) zugeführt. In diesen Prismen (4a, 4b) wird durch strahlenteilende Beschichtung der aneinanderliegenden Seiten der Prismen (4a, 4b) eine Lichtteilung erzielt Die Beschichtung ist derart ausgelegt, daß die der Augenempfindlichkeit entsprechenden kurzwelligen Lichtanteile durchgelassen werden und über die Strichplatte (8), den Prismen (10) und den Prismen (11a, 11b) zugeführt werden.

Die der Empfindlichkeit des Restlichtverstärkers (12) entsprechenden langwelligen Lichtanteile sowie der (vom Lasersender (2) ausgestrahlte, vom Zielobjekt reflektierte) Laserstrahl werden von der Beschichtung der Prismen (4a, 4b) reflektiert und den Prismen (5a, 5b) zugeführt. Die Beschichtung der aneinanderliegenden Seiten der Prismen (5a, 5b) ist derart ausgelegt, daß diese für den Laserstrahl durchlässig ist und der Laserstrahl dem Laserempfänger zugeführt wird. Andere Wellenlängen werden von der strahlenteilenden Beschichtung der Prismen (5a, 5b) reflektiert und über ein Laserschutzfilter (7) dem Restlichtverstärker (12) zugeführt. Durch die besondere strahlenteilende Beschichtung der Prismen (4,5) ergeben sich trotz Verwendung einer einzigen Lichteintrittsoptik (1) keine wesentlichen Lichtverluste. Die vom Restlichtverstärker (12) verstärkten langwelligen Lichtanteile werden über die Feldlinse (13) den Umkehroptiken (14) zugeführt. Durch optische Wegverlängerung im Restlichtverstärker (12) und Verwendung der Umkehroptiken (14) wird ein seitenrichtiges, deckungsgleiches Bild der vom Restlichtverstärker (12) verstärkten, ehemals langwelligen Lichtanteile mit den der Augenempfindlichkeit entsprechenden kurzwelligen Lichtanteile in den Prismen (11a, 11b) ermöglicht. Die Beschichtung der aneinanderliegenden Seiten der Prismen (11a, 11b) ist derart aus gelegt, daß durch das Restlicht ein auf ein vorteilhaftes Verhältnis der Lichtaufteilung zwischen Beobachtung und Geschwindigkeitssensor auf der Basis eines Fotodiodenarrays (25) Rücksicht genommen wird. Die vom Laserempfänger (6) über einem Rechner, sowie einen Teilbereich der Steuerelektronik (21) ausgewertete Entfernung, wird mittels einer Digitalanzeige (22) in die vom Restlichtversärker (12) austretenden Lichtanteile, zwischen Feldlinse (13) und Umkehroptik (14) eingespiegelt und den Prismen (11a, 11b) zugeführt. Die zusammengeführten Lichtanteile einschließlich der eingespiegelten Entferungsanzeige werden über ein weiteres Laserschutzfilter (15) der Prismenanordnung (16), einem Pentaprisma, und einer Strichplatte (19) dem Beobachtungsokular (20) zugeführt. Zur Geschwindigkeitsmessung findet eine Projektion auf den Geschwindigkeitssensor eine Projektion auf (24) (Fotodiodenarray (25)) statt, wobei die Helligkeitsänderungen ausgewertet werden und diese Änderungen zur Ermittlung der Winkelgeschwindigkeit und damit auch zum Erkennen der Fahrtrichtung dienen. Die Werte der Entfernung, der Fahrtrichtung und der Winkelgeschwindigkeit, ergeben zusammen mit den kennzeichnenden Munitionsdaten die jeweils von der Steuer elektronik (21) errechneten Werte für ein automatisches Vorhalten bzw. Absehen.

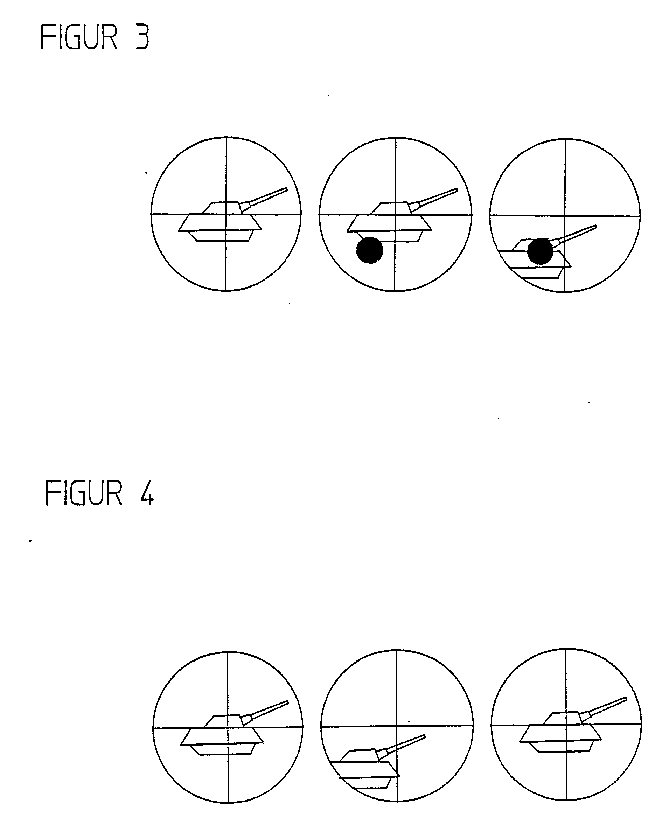

Ein automatisches Anzeigen der Vorhaltegröße auf elektrischer bzw. elektronischer Basis erfolgt durch eine dem Bedarfsfalle entsprechende LED oder LCD Anzeige auf der Strichplatte (19) vor dem Beobachtungsokular (20). Dabei sind als Anzeigeelemente Einzel-LED oder LCD zeilenförmig aneinandergereiht, oder als Matrix ausgebildete LED- oder LCD-Elemente angeordnet. Die von der Steuerelektronik (21) errechnete Vorhaltegröße wird, wie im Beispiel der Figur 3 ersichtlich, durch Aufleuchten des betreffenden Anzeigenelementes als Zielmarke (23) dargestellt. Nun braucht nur mehr entweder mechanisch oder durch die Steuerelektronik (21) selbsttätig das anvisierte Zielobjekt mit dem aufleuchtenden Anzeigeelement zur Deckung gebracht werden. Bei einem automatischen Anzeigen der Vorhaltegröße auf mechanischer Basis wird das Lichteintrittsobjektiv (1) von der Steuerelektronik (21) entsprechend dem Vorhaltewert sowohl vertikal als auch horizontal verstellt. Dabei braucht nur mehr entweder mechanisch oder durch die Steuerelektronik (21) selbsttätig betätigt die Fadenkreuzmitte mit dem neu angezeigten Zielobjekt zur Deckung gebracht werden.

Eine weitere Möglichkeit bietet die Erfindung dadurch, daß bei dem elektrischen bzw. elektronischen Anzeigen der Vorhaltegröße das Anzeigeelement (LED, LCD) entsprechend dem Zeitwert der Flugzeit der verwendeten Munition aufleuchtet. Außerdem besteht die Möglichkeit nach beendetem Regel- bzw. Steuervorgang des Nachrichtens, wenn also die Vorhaltegröße errechnet, dargestellt und nachgerichtet wurde, dem Bediener mittels akustischem Signal den Regelungsabschluß anzukündigen.

Grundsätzlich ist es für die Verwendung der Einrichtung freigestellt in welcher Bauform und Bauart das Beobachtungsokular herausgeführt wird. Sowohl aus Sicherheitstechnischen Gründen als auch aus Gründen der Bedienungsfreundlichkeit wird vorzugsweise ein gegenüber der Lichteintrittsoptik (1) abgewinkeltes Beobachtungsokular (20) Anwendung finden.

Bei der vorgelegten Erfindung ist es weiters möglich durch ein an die Prismenanordnung (16) angeordenetes Prisma (17) und einer zusätzlichen Austrittsoptik (18) direkt eine Bildaufzeichung- oder Übertragungseinrichtung anzuschließen, und eine Bedienung wahlweise direkt über das Beobachtungsokular (20) oder über die Bildaufzeichnungs- oder Übertragungseinrichtung vorzunehmen.

**Ansprüche**

1) Optoelektronische Visier-, Ziel-, Meß- und Steuereinrichtung, gekennzeichnet durch eine für Tag-, Nacht- und Lasercharakteristik in einem Wellenlängenbereich von ca. 380 bis ca. 1100 nm ausgeführten gemeinsamen Lichteintrittsoptik (1), durch die Prismen (4a, 4b), die an den aneinanderliegenden Seiten mit einer der Augenempfindlichkeit entsprechend kurzwelligen Lichtanteile durchlässigen, der Empfindlichkeit des Restlichtverstärkers (12) entsprechend langwelligen Lichtanteile und Laserstrahl reflektierenden, strahlenteilenden Beschichtung versehen sind, durch die Prismen (5a, 5b), die an den aneinanderliegenden Seiten mit einer für Laserstrahl durchlässigen, andere Wellenlängen reflektierenden, strahlenteilenden Beschichtung so versehen sind, daß sich trotz Verwendung einer einzigen Lichteintrittsoptik (1) keine wesentlichen Lichtverluste ergeben, durch die Prismen (11a, 11b), die an den aneinanderliegenden Seiten eine Beschichtung aufweisen, die ein für die Lichtaufteilung zwischen einem Beobachtungsokular und einem Geschwindigkeitssensor (24) vorteilhaftes Verhältnis ergibt, wobei durch die Umkehroptiken (14) sowie durch die Wegverlängerung im Restlichtverstärker (12) ein seitenrichtiges, deckungsgleiches Bild bei Tagsicht und Nachtsicht erreicht wird und während des Zielvorganges mittels des empfangenen Signals vom Laserempfänger (6) über die Steuerelektronik (21) die Entfernung des Zielobjektes durch eine Digitalanzeige (22) in die Prismenanordnung (11) eingeblendet wird und zusammen mit dem aus der Geschwindigkeitsmessung, einer Projektion auf einen Geschwindigkeitssensor (25) mit Auswertung der Helligkeitsveränderung zur Erfassung der Winkelgeschwindigkeit und Fahrtrichtung zusammen mit der Entfernungsmessung ermittelten Wert unter Berücksichtigung der erforderlichen Munitionsdaten eine automatische Vorhaltung erreicht sowie eine automatische Abseheinrichtung ansteuert und durch ein gemeinsames Beobachtungsokular (20) angezeigt wird.

2) Optoelektronische Visier-, Ziel-, Meß- und Steuereinrichtung nach Patentanspruch 1, gekennzeichnet durch die Darstellung der Vorhaltegröße mittels der in das Beobachtungsokular (20) eingeblendeter LED- oder LCD-Anzeige (23), wobei das Element der Darstellung einzeln oder als Zeile oder als Matrix ausgebildet sein kann.

3) Optoelektronische Visier-, Ziel-, Meß- und Steuereinrichtung nach Patantanspruch 1, gekennzeichnet durch die Darstellung der Vorhaltegröße mittels dem horizontal und vertikal um den von der Steuerelektronik (21) ausgelösten Wert verstellbaren Lichteintrittsobjektiv (1).

4) Optoelektronische Visier-, Ziel-, Meß- und Steuereinrichtung nach den Patentansprüchen 1 und 2, gekennzeichnet durch ein Darstellen der Vorhaltegröße als Zeitwert, wobei die Darstellungselemente entsprechend der Flugzeit der Munition aufleuchten.

5) Optoelektronische Visier-, Ziel-, Meß und Steuereinrichtung nach den Patentansprüchen 1 bis 4, gekennzeichnet durch eine akustische Anzeige des Beendeten Regel- und Steuervorganges des Nachrichtens.

6) Optoelektronische Visier-, Ziel-, Meß- und Steuereinrichtung nach den Patentansprüchen 1 bis 5, gekennzeichnet durch ein gegenüber der Lichteintrittsöffnung (Optik) abgewinkeltes Beobachtungsokular.

7) Optoelektronische Visier-, Ziel-, Meß- und Steuereinrichtung nach den Patentansprüchen 1 bis 6, gekennzeichnet durch ein an die Prismenanordnung (16) zusätzlich angeordnetes Prisma (17), an das über eine zusätzlich herausgeführte Austrittssoptik (18) direkt eine Bildaufzeichnung- oder Übertragungseinrichtung angeschlossen werden kann und eine Beobachtung wahlweise entweder über das Beobachtungsokular (20) oder über die Bildaufzeichung oder Übertragunseinrichtung vorgenommen werden kann.

8) Optoelektronische Visier-, Ziel-, Meß und Steuereinrichtung nach den Patentansprüchen 1 bis 7, gekennzeichnet durch eine mechanische und/oder elektrische feste Verbindung, mit dem zu steuernden Gerät oder Apparat.

FIGUR 1

| TAG |
| NACHT |
| ENTF |
| GESCHW | ABSEH |

FIGUR 2

FIGUR 3

FIGUR 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 997 762 (RITCHIE et al.) <br> * Zusammenfassung; Figur 2; Spalte 1, Zeile 67 - Spalte 3, Zeile 45; Spalte 4, Zeilen 45-48 * <br> --- | 1,2,4,8 | F 41 G 3/06 <br> G 02 B 23/12 <br> G 01 S 17/02 |
| A | GB-A-1 505 314 (BARR & STROUD LTD) <br> * Spalte 1, Zeile 15 - Spalte 2, Zeile 2; Spalte 3, Zeilen 26-49; Figuren 2,3,9; Spalte 4, Zeilen 78-96 * <br> --- | 1 | |
| A | US-A-3 992 629 (CHAPMAN) <br> * Figuren 6,7,8; Spalte 6, Zeile 40 - Spalte 7, Zeile 62 * <br> --- | 1 | |
| A | MARCONI RADAR SYSTEMS LTD, CONTROL AND SIMULATION DIVISION, CE-20, "issue 2", pages 1-7, The Marconi Co. LTD, Leicester, GB; "New simplified fire control system SFCS 600 for T54/55 & T62 battle tanks" <br> * Seite 6: "Operating sequence" * <br> --- | 1-4 | |
| A | EP-A-0 156 181 (SIEMENS AG) <br> * Zusammenfassung; Figuren 1,2 * <br> --- | 1 | RECHERCHIERTE SACHGEBIETE (Int. Cl.4) <br><br> F 41 G <br> G 01 S <br> G 02 B <br> G 01 B |
| A | DE-C-3 439 068 (MBB GmbH) <br> * Das ganze Dokument * <br> --- | 1 | |
| A | IEEE TRANSACTIONS ON INSTRUMENTATION AND MEASUREMENT, Band IM-19, Nr. 2, Mai 1970, Seiten 136-139, New York, US; P.-F. CHEN: "Optimal perturbation signal waveform for sensing arrays" <br> * Absatz "Introduction" * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 17-01-1989 | BLONDEL F.J.M.L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)